# FASCICULE DE BREVET EUROPEEN

(11) **EP 3 358 758 B1**
(45) Date de publication et mention de la délivrance du brevet: **21.10.2020**
(21) Numéro de dépôt: 18154686.2
(22) Date de dépôt: 01.02.2018
(51) Int. Cl.: G06F 1/14, H04B 7/185

(54) **PROCÉDÉ ET SYSTÈME POUR TRANSPORTER DES SIGNAUX DANS UN SYSTÈME SATELLITAIRE**
VERFAHREN UND SYSTEM ZUM TRANSPORTIEREN VON SIGNALEN IN EINEM SATELLITENSYSTEM
METHOD AND SYSTEM FOR TRANSPORTING SIGNALS IN A SATELLITE SYSTEM

(30) Priorité: 02.02.2017 FR 1700106
(43) Date de publication de la demande: 08.08.2018
(73) Titulaire: Thales, 92400 Courbevoie (FR)
(72) Inventeur: ARNAUD, Mathieu, 31100 Toulouse (FR); ALMEIDA, Jean-Luc, 31100 Toulouse (FR); ARNAUD, David, 33110 Le Bouscat (FR); BAUDOIN, Cédric, 31100 Toulouse (FR); DECROIX, Jacques, 31100 Toulouse (FR); CORBEL, Erwan, 31100 Toulouse (FR)
(74) Mandataire: Marks & Clerk France

(56) Documents cités:
- US-A1- 2004 028 162
- US-A1- 2015 215 031

## Description

L'invention concerne un système et un procédé pour transmettre des signaux dans un système satellitaire. Elle se situe notamment dans le cadre des réseaux utilisateurs satellites pour la transmission de signaux radiofréquences.

L'accroissement des débits notamment dans le cadre des satellites dit VHTS (abrégé anglo-saxon de Very High Throughput Satellite) entraîne la multiplication des infrastructures avec des coûts de maintenance et d'interconnexion qui sont corrélés. Pour des besoins de capacité et donc de ressources fréquentielles, il est nécessaire d'utiliser des bandes de fréquence de plus en plus hautes (Q/V du spectre électromagnétique) comportant des variations d'atténuation liées aux conditions météorologiques importantes. Quand les conditions météorologiques sont trop dégradées, il est nécessaire d'utiliser une stratégie de diversité de site consistant à passer par un autre site d'ancrage ou passerelle connu sous l'expression anglo-saxonne « gateway ». Une « gateway » est localisée à divers endroits sous la couverture d'un satellite. La diversité de site consiste en l'utilisation de lieux suffisamment éloignés pour que la corrélation entre les conditions météorologiques soit négligeable. L'inconvénient qui en résulte est la multiplication des localisations et donc des infrastructures avec l'accroissement des coûts qui l'accompagne.

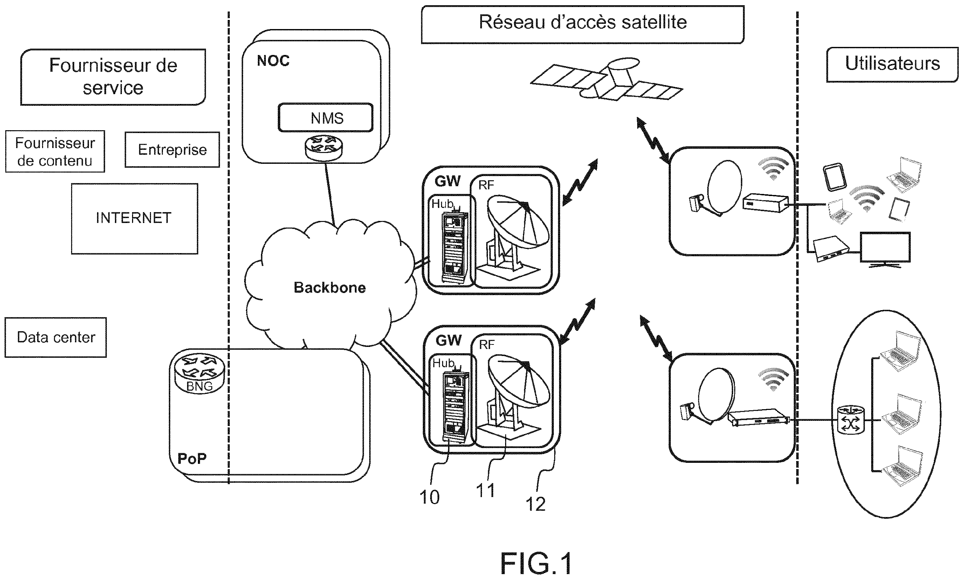

La figure 1 illustre un réseau utilisateur 1 selon l'art antérieur dans lequel un Hub 10 et un module RF 11 sont colocalisés dans une gateway 12. Une telle architecture conduit à des tailles de gateway importantes car ces dernières doivent être dimensionnées de façon à pouvoir distribuer vers le satellite le maximum de capacité. De plus, le trafic doit être rerouté d'une gateway à une autre en cas de diversité de site.

L'enseignement technique de la demande de brevet US 2004/028162 décrit un procédé de synchronisation dans un réseau de téléphonie mobile, qui est de réduire les coûts d'infrastructure en déportant le Hub au niveau du point de collecte afin notamment de les mutualiser. La partie hub n'est pas déportée dans la partie terrestre.

L'idée mise en œuvre dans la présente invention consiste notamment à localiser les hubs (parties bande de base) au niveau d'un point de collecte, plus connu dans le domaine des satellites sous l'abréviation PoP, réduisant ainsi la taille des passerelles ou « gateways » qui conservent uniquement la partie RF, en fonctionnement normal.

L'invention concerne un système de transmission de données dans un réseau de communication, le réseau de communication comprenant un lien de transmission satellite, une partie fournisseur de services, une partie utilisateur et un réseau d'accès satellite comprenant un point de collecte PoP adapté à dispatcher des flux de données, le système de transmission de données comprenant plusieurs passerelles comprenant une partie radiofréquence, ledit système comprenant en outre un modulateur de données à transmettre comprenant au moins une partie dorsale d'émission située dans une partie bande de base et une partie frontale d'émission située dans la partie radiofréquence :
- Ladite partie dorsale d'émission étant positionnée au niveau de la partie point de collecte PoP et comportant :
   - un module de référence d'horloge réseau NCR adapté à prendre en compte une référence de temps absolue externe pour reconstituer une horloge de réseau pour une synchronisation dans la transmission des données et un module émetteur, ledit module NCR étant adapté à fournir au module émetteur, lors du début d'une nouvelle hyper-trame à envoyer, une valeur de date courante NCR à insérer dans un champ de données de l'hyper-trame en cours de construction, le début de ladite nouvelle hyper-trame étant indiqué par une information H.F.Tx trigger reçue dudit module émetteur,
   - ledit module émetteur étant adapté à recevoir la valeur de ladite date NCR, à l'insérer dans un paquet de données à transmettre à la partie frontale d'émission et à émettre en direction du module NCR l'information H.F.Tₓ trigger sur un instant de synchronisation pour un module récepteur de la partie frontale d'émission,
- Ladite partie frontale d'émission étant positionnée dans la partie radiofréquence d'une passerelle et comportant les modules suivants :
   - le module récepteur adapté à générer plusieurs informations vers un module de reconstruction d'une horloge pour la synchronisation et la lecture des données, lesdites informations contenant : une information sur la latence du lien de transmission entre la partie dorsale d'émission et la partie frontale d'émission, une information sur l'instant d'arrivée tₐ dudit paquet de données émis par la partie dorsale d'émission et signalé par un signal H.F.Rx trigger, et une information H.F.Rx NCR correspondant à la valeur de la date NCR extraite du paquet de données et correspondant au début de l'hyper-trame reçue à prendre en compte sur réception de l'information H.F.Rx trigger afin de reconstituer localement au niveau de la partie radiofréquence une horloge corrigée de la latence de transmission entre la partie dorsale d'émission et la partie frontale d'émission du modulateur,
   - le module de reconstruction adapté à reconstruire une horloge en local à partir de la valeur de la latence du lien de transmission, la valeur de la date NCR contenue dans les données transmises et l'instant d'arrivée tₐ du paquet de données,
   - un module d'insertion adapté à insérer l'horloge locale reconstruite dans un paquet de données reçues par le récepteur avant transmission des données modulées via le satellite,
- La partie dorsale d'émission et la partie frontale d'émission étant adaptées à échanger des données encapsulées selon un protocole utilisé pour la transmission dans le système.

Le système peut comporter en outre un démodulateur constitué de deux parties :
Une partie frontale de réception située au niveau de la passerelle du système comportant les modules suivants :
   - Un module de réduction du nombre de bits transportant l'information, avant transmission via un module émetteur,
Une partie dorsale de réception située au niveau d'un point de collecte PoP et comportant au moins le module suivant :
   - Un module récepteur.

La partie frontale d'émission peut comporter en outre les éléments suivants :
- un module d'adaptation du flux de données,
- un module de codage,
- un module de mapping adapté à transformer les données sous forme de bits codés en symboles,
- un module adapté à insérer un en-tête et des pilotes,
- un module de modulation des données numériques,
- un module Tuner, et
- un module M&C Handler adapté à assurer la configuration et la surveillance des différents éléments du modulateur.

Le modulateur peut être un modulateur selon le standard de diffusion de vidéo numérique par satellite de seconde génération DVB-S2, et le démodulateur peut être un démodulateur selon le standard de diffusion de vidéo numérique avec voie de retour par satellite de seconde génération DVB-RCS2. Le protocole mis en œuvre est par exemple le protocole de l'interface radio publique commune CPRI.

L'invention concerne aussi un procédé de transmission de signaux mis en œuvre par un système de transmission de données dans un réseau de communication selon l'invention, le réseau de communication comprenant un lien de transmission satellite, une partie fournisseur de services, une partie utilisateur et un réseau d'accès satellite comprenant un point de collecte PoP adapté à dispatcher des flux de données, ledit système de transmission de données comprenant plusieurs passerelles comprenant une partie radiofréquence RF, et ledit système comprenant en outre un modulateur de données à transmettre comprenant au moins une partie dorsale d'émission située dans une partie bande de base et une partie frontale d'émission située dans la partie radiofréquence, ledit procédé comporte au moins les étapes suivantes :
- Dans la partie dorsale d'émission du modulateur située au niveau du point de collecte PoP, ladite partie dorsale d'émission comprenant un module de référence d'horloge réseau NCR et un module émetteur,
- Une étape de prise en compte par le module NCR d'une référence de temps absolue externe pour reconstituer une horloge de réseau utilisée pour synchroniser la transmission des données, de transmission au module émetteur, lors du début d'une nouvelle hyper-trame à envoyer, d'une valeur de date courante NCR à insérer dans un champ de données de l'hyper-trame en construction, et de réception d'une information H.F.Tx trigger émise par ledit module émetteur indiquant le début de ladite nouvelle hyper-trame,
- Une étape de réception par le module émetteur de la valeur de la date NCR, d'insertion de cette valeur de la date NCR dans un paquet de données à transmettre à la partie frontale d'émission et d'émission en direction du module NCR, de l'information H.F.Tₓ trigger sur un instant de synchronisation t_{sync} pour un module récepteur de la partie frontale d'émission ,
- Dans la partie frontale d'émission :
   - Une étape de génération par le module récepteur d'informations pour la synchronisation et la lecture des données et d'émission de ces informations vers un module de reconstruction d'une horloge, cesdites informations contenant: une information sur la latence du lien de transmission entre la partie dorsale d'émission et la partie frontale d'émission, une information tₐ sur l'instant d'arrivée du paquet de données émis par la partie dorsale d'émission, signalé par un signal H.F.Rx trigger et une information H.F.Rx NCR correspondant à la valeur de la date NCR extraite du paquet données et correspondant au début de l'hyper-trame reçue à prendre en compte sur réception de l'information H.F Rx trigger afin de reconstituer localement au niveau de la partie radiofréquence une horloge corrigée de la latence de transmission entre la partie dorsale d'émission et la partie frontale d'émission du modulateur,
   - Une étape de reconstruction par le module de reconstruction d'une valeur d'horloge locale à partir de la valeur de latence du lien de transmission, de la valeur de la date NCR contenue dans les données transmises et de l'instant d'arrivée tₐ du paquet de données,
- Une étape d'insertion par un module d'insertion de l'horloge locale reconstruite dans un paquet de données reçues par le récepteur avant transmission des données modulées via le satellite,
- Une étape d'échange entre la partie dorsale d'émission et la partie frontale d'émission de données encapsulées selon un protocole utilisé pour la transmission de données dans le système.

Le format des données est le format de l'interface radio publique commune CPRI qui peut être utilisé pour la transmission des données encapsulées entre la partie dorsale d'émission et la partie frontale d'émission ou encore un format de trames selon le standard de diffusion de vidéo numérique par satellite de seconde génération DVB-S2.

D'autres caractéristiques et avantages de la présente invention apparaîtront mieux à la lecture de la description qui suit d'exemples de réalisation donnés à titre illustratif et nullement limitatifs, annexée des figures qui représentent :
- Figure 1, un schéma d'un réseau selon l'art antérieur,
- Figure 2, un exemple d'architecture réseau selon l'invention,
- Figure 3, un exemple d'architecture du modulateur selon l'invention,
- Figure 4, un exemple d'architecture du démodulateur selon l'invention, et
- Figure 5, un exemple de mutualisation des modules.

Afin de bien faire comprendre l'invention, l'exemple qui suit est donné dans le cadre d'un réseau utilisateur mettant en œuvre un transport radiofréquence RF et une interface connue de l'homme du métier sous les initiales anglo-saxonnes CPRI (Common Public Radio Interface) et pour un modulateur de type DVB-S2(x) et un démodulateur de type DVB-RCS2 connus de l'homme du métier. Sans sortir du cadre de l'invention, tout homme du métier pourra adapter les modules explicités ci-après pour leur mise en œuvre dans un système satellitaire quelque soit le protocole de transmission et de modulation/démodulation utilisé.

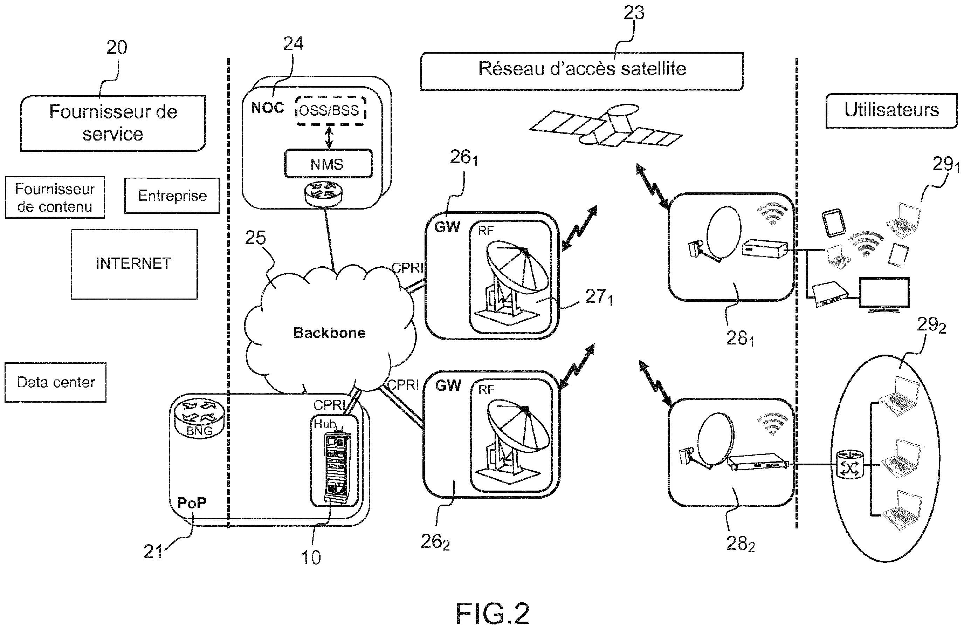

La figure 2 illustre un exemple d'architecture selon l'invention comprenant une partie 20 fournisseur de services qui ne sera pas détaillée car son fonctionnement est connue de l'homme du métier, un module 21 ou point de collecte PoP ayant notamment pour fonction de dispatcher les flux de données à partir des fournisseurs vers les utilisateurs, via les gateways. Ce module point de collecte, PoP, va inclure les différents hubs habituellement localisés dans l'art antérieur au niveau des gateways. La partie réseau satellite, 23, s'organise autour du « backbone » opérateur 25 qui permet de faire transiter les données entre le PoP, 21, et les gateways 26₁, 26₂, mais aussi les informations de gestion entre un ou plusieurs centres d'exploitation réseau NOC (Networks Opérations Center) 24 qui, reliés aux différentes gateways, permettent la gestion du système d'accès par satellite. En fonctionnement normal du dispositif selon l'art antérieur, dans les gateways 26j, se trouve la partie Hub 10 qui communique avec la partie RF 27j qui communique via le satellite ST vers des terminaux 28k de réception liés à différents utilisateurs 29l.

L'idée de base de l'invention est notamment de découper le modulateur et le démodulateur utilisés dans le système satellitaire au niveau du point de collecte PoP et au niveau des gateways du système afin de minimiser le débit nécessaire à la transmission des données.

Les parties Hub 10 étant disposées au niveau du point de collecte PoP, elles pourront être mutualisées. En effet, une gateway dans l'art antérieur est dimensionnée en considérant le cas le plus défavorable (nombre maximum de demandes et de débits simultanés en provenance de plusieurs utilisateurs) ; ainsi la somme de la capacité des différentes gateways se trouvait être largement supérieure à celle du satellite. Dans le cas du procédé selon l'invention, la co-localisation des Hubs 10 au niveau du point de collecte PoP, 21, permet de dimensionner des Hubs 10 à la juste capacité du satellite.

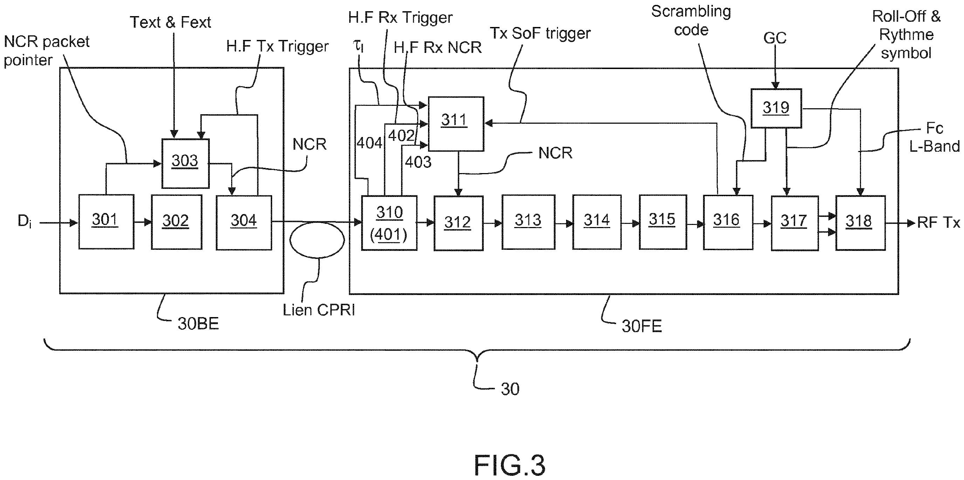

La figure 3 illustre un exemple de modulateur 30 selon l'invention qui est distribué entre le point de collecte PoP et une gateway. Une première partie ou Back-End 30BE est située au niveau du Hub 10 et une partie Front-End 30FE se trouve dans le module RF 27j. L'idée consiste notamment à transporter la trame bande de base ou BB-Frame sur le lien CPRI. Cette trame comporte un champ de données incluant des informations de synchronisation et/ou d'identification (identifiant) du demandeur ou de l'utilisateur et un champ pour des données issues du fournisseur de services à transmettre à un utilisateur demandeur.

La partie dorsale d'émission ou Back-End 30BE comporte au moins les éléments suivants :
- un module gestionnaire de trafic ou Trafic Handler 301 qui reçoit les données Di à moduler sur une interface ad'hoc par exemple GbE, connue de l'homme du métier,
- un module Mode Adaptation 302, dont le contenu est par exemple, décrit au paragraphe §5.1 du document ETSI EN 302 307 définissant le standard DVB-S2 dans sa version 1.4.1. Son rôle est de préparer les données Di afin de pouvoir les insérer dans la partie en-tête BB-Header,
- un module NCR 303 qui prend en compte une référence de temps absolue externe tₑₓₜ pour reconstituer une horloge de réseau NCR (Network Clock Reference) pour permettre une synchronisation des différents équipements du réseau d'accès, en particulier l'envoi des trames RCS2 par les terminaux afin de pouvoir mettre en œuvre un accès multiplexé en temps. Lors du début d'une nouvelle Hyper-trame CPRI à envoyer, indiqué par le paramètre déclencheur « H.F Tx Trigger » explicité ci-après, ce module NCR fournit la date NCR courante (correspondant à un instant donné, information temporelle) afin qu'elle soit insérée dans le champ données propriétaires ou « proprietary data » de l'Hyper-trame en cours de construction,
- un module émetteur CPRI 304 : ce module reçoit la valeur de la date NCR à insérer dans le paquet de données à transmettre qui va permettre la synchronisation et la lecture des données et émet en direction du module NCR 303 une information H.F.Tₓ trigger sur l'instant de synchronisation t_{sync} pour le récepteur.

Le fonctionnement de ces différents modules sera décrit plus loin.

La partie frontale d'émission ou Front-End 30FE comporte les modules suivants :
- Un module récepteur CPRI 310 qui émet plusieurs informations vers un module de reconstruction d'une horloge NCR, nécessaire à la synchronisation et à la lecture des données; ces informations contiennent une information sur la latence τ du lien de transmission, une information de déclenchement de réception de début d'une nouvelle Hyper-Trame de données, H.F.Rx trigger, une information H.F.Rx.NCR qui correspond à la valeur NCR (date NCR) correspondant au début de l'Hyper-Trame reçue et donc à prendre en compte sur réception du « H.F Rx trigger » afin de reconstituer localement l'horloge NCR corrigée de la latence de transmission; le module récepteur transmet aussi les données numériques radiofréquence transmises par la partie Back-End,
- Un module de reconstruction de la valeur de l'horloge locale NCR, 311, à partir des informations de synchronisation contenues dans le paquet de données reçues par le récepteur CPRI (valeur de la date et valeur de la latence),
- Un module d'insertion, 312, de la date exacte (valeur NCR) dans un paquet de données, comme il est décrit, par exemple au paragraphe §6.2.1 ETSI EN 301-545-2,
- Un module d'adaptation du flux de données, 313, dont le fonctionnement est, par exemple, décrit au paragraphe §5.2 - ETSI EN 302 307. Son rôle est d'opérer un bourrage de la trame, si besoin, ainsi que d'insérer un en-tête BB-Header. Les données à émettre sont aussi embrouillées à ce niveau,
- Un module de codage 314 : le contenu de ce bloc est décrit au paragraphe §5.3 - ETSI EN 302 307. Son rôle est d'encoder les données avec un code correcteur d'erreur. Dans le cadre du standard de transmission DVB-S2(x), il s'agit d'un code BCH suivit d'un code vérification de parité à faible densité ou LDPC (Low Density Parity Code),
- Un module de mise en cohérence ou mapping 315: le contenu de ce bloc est décrit au paragraphe §5.4 - ETSI EN 302 307. Il transforme les données sous forme de bits encodés en symboles en fonction du type de constellation désiré. Dans certains cas, un entrelaçage des données est ajouté,
- Un module 316 - PL-Framing : le contenu de ce bloc est décrit au paragraphe §5.5 - ETSI EN 302 307. Il insère un en-tête, des pilotes optionnels et procède à une dispersion de l'énergie en utilisant un code d'étalement,
- Un module de modulation des données numériques 317 qui met en forme le signal à l'aide d'un filtre en racine de cosinus surélevé, par exemple, et procède en fonction du débit symbole du protocole de transmission à une conversion de débit afin de nourrir un convertisseur numérique/analogique,
- Un module Tuner 318 : les signaux en sortie du convertisseur numérique analogique DAC sont transposés en fréquence intermédiaire afin d'être émis vers les utilisateurs, RF Tₓ,
- Un module 319 de contrôle et gestion, M&C Handler, assurant la configuration et la surveillance des différents éléments du modulateur. Ce module reçoit les informations de contrôle et de gestion.

La gestion des informations d'horloge et de synchronisation (date insérée dans la trame des données et latence) pour la partie modulateur située au niveau du Back-End et pour la partie modulateur située au niveau du Front-End va maintenant être décrite. Le module émetteur CPRI, 304, va encapsuler les données Di à transmettre en respectant le format CPRI. Ce format comprend une première partie contenant une information NCR (informations pour la synchronisation des différents récepteurs) et des données Di à transmettre à la partie Front-End pour être modulées.

Les données encapsulées sont transmises via un lien CPRI au niveau d'une ou de plusieurs gateways en fonction des demandes des utilisateurs. Un exemple de schéma de mutualisation des hubs et des gateways est donné dans la suite de la description.

La transmission des signaux RF numérisés se fera sur le lien CPRI évitant ainsi l'utilisation de câbles RF pour la transmission des données, la norme CPRI dans sa version 6.1 étant définie par le consortium du même nom sur le site internet www.cpri.info.

La figure 3 illustre aussi les étapes de reconstruction de la valeur de NCR.

Côté Front-End (30FE), un signal de déclenchement de réception des données Rx (H.F. Rx trigger) est généré par le module de réception CPRI 310 en début de l'hyper-trame, 401. Il est envoyé par le bloc émetteur CPRI au module de reconstruction du NCR 311. Ce signal est accompagné de la valeur de la date NCR récupérée de la partie « émanant du fournisseur » extraite des données pour former le signal « H.F. Rx NCR ».

L'instant d'arrivée tₐ du paquet de données est signalé par un signal « H.F. Rx trigger », 402, ainsi que la valeur de date NCR correspondante par « H.F. Rx NCR », 403. Ces deux signaux (valeur de la date et instant d'arrivée du paquet des données) permettent au module de reconstruction « Local NCR reconstruction » 311 de reconstituer localement l'horloge NCR grâce à une boucle de type PLL numérique, par exemple.

En utilisant la fonction native du CPRI permettant de mesurer la latence entre les deux extrémités de la chaîne de transmission (instant d'émission - instant de réception côté récepteur du modulateur), cette valeur locale de l'horloge NCR, NCR_{local}, peut être compensée NCR_{comp} pour représenter une valeur identique à la valeur de l'horloge au niveau du Back-End. Cette information est passée du bloc « CPRI receiver » au bloc « Local NCR reconstruction » par le signal « Link latency », □ₗ, 404.

Au final, cette horloge NCR reconstituée va pouvoir servir à l'insertion d'une date NCR dans les trames DVB-S2(x) selon les recommandations de la norme DVB-RCS2 (§6.2.1) connue de l'homme du métier.

Le format CPRI est par exemple utilisé dans le format I&Q (phase et quadrature de phase) de huit bits. Les données issues d'un Back-End vers un Front-End sont encapsulées dans un container AxC de 16 bits, par exemple, en utilisant le format indiqué. Ceci permettra notamment de pouvoir transporter les données de plusieurs Back-End vers les Front-End respectifs sur un même lien physique CPRI en multiplexant dans le même flux CPRI, les données à destination de plusieurs Front-End. Les containers des données sont par exemple codés de façon consécutive dans les hyper-trames CPRI et des données de remplissage ou « padding » sont ajoutées en fin d'hyper-trame si elle n'est pas complètement remplie.

Pour chaque container AxC, deux mots de contrôle sont ajoutés dans les données «Vendor Specific » définies par le standard CPRI.

Ces deux mots sont par exemple découpés comme suit, en partant du bit le plus faible LSB du second mot :
- 12 bits donnent la distance en mots de 16 bits entre le début du container AxC et le prochain en-tête BB-Header,
- 17 bits indiquent la taille de l'A×C container en mots de 16 bits,
- Les bits restant indiquent le numéro logique de l'A×C container.
Le descripteur d'un AxC container DVB-S2(x) peut se représenter de la façon suivante :

| | | |
|---|---|---|
| Identificateur émetteur Back-End (n bits) | Taille container A×C (17 bits) | Position BB-Header dans container AxC (12 bits) |

L'indication du nombre de bits restants permet d'ajouter et d'enlever à la volée sur un lien CPRI les flux provenant de différents Back-End.

La taille des containers AxC permet de les délimiter dans l'hyper-trame. Enfin, la distance au prochain en-tête BB-Header permet, lors du démarrage du lien, une synchronisation sur les frontières des BB-trames. En effet, lorsque la première BB-trame est trouvée, les champs DFL du BB-Header permettent de déterminer la trame suivante et ainsi de suite jusqu'à la fin de l'A×C container.

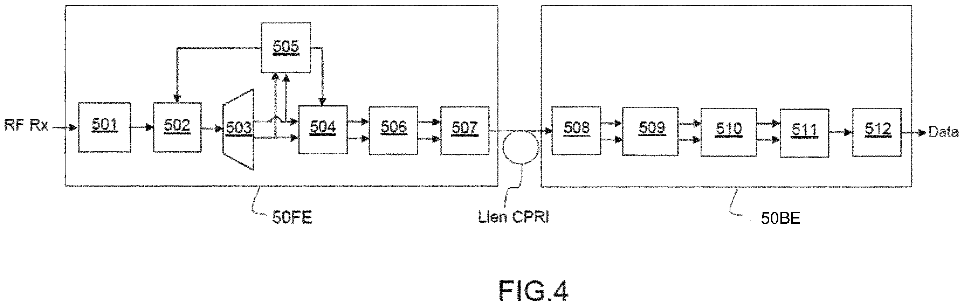

La figure 4 illustre un exemple de démodulateur 50 selon l'invention qui se trouve réparti entre la partie dorsale de réception ou Back-End 50BE et la partie frontale de réception ou Front-End 50FE. Cet exemple de démodulateur permet de traiter une forme d'onde de type DVB-RCS2 définie par le standard ETSI EN 301 545-2 dans sa version 1.2.1. C'est une forme d'onde de type MFTDMA, accès multiple par répartition de temps multi-fréquence (Multiple Frequency Time Division Multiplexing Access). Cela veut dire que chaque émetteur envoie une quantité de données codées appelée burst et que ces bursts sont multiplexés en fréquence et en temps selon un système de grilles fréquentielles et temporelles appelées trames.

Au niveau de la partie Front-End 50FE, le dispositif comporte par exemple les éléments suivants :
- Un Tuner 501 qui reçoit le signal RF Rₓ contenant les données et les informations de synchronisation et le rapporte dans une bande propre pouvant être digitalisée selon des techniques connues de l'homme du métier,
- Un module de contrôle automatique de gain AGC, 502, qui permet de régler le niveau du signal afin d'optimiser son niveau et optimiser la quantification numérique qui serait faite par un convertisseur analogique numérique ADC, 503 transformant le signal analogique en signal numérique,
- Un module d'ajustement du gain, 504, qui normalise l'amplitude du signal afin que l'amplitude maximale du signal soit codée par la valeur maximale admissible,
- Un module de mesure dynamique du rapport signal sur bruit SNR, 505: Le niveau du signal numérisé par le convertisseur analogique-numérique ADC ainsi que le rapport signal sur bruit des bursts décodés sont mesurés et utilisés pour générer une consigne vers le module AGC et le module d'ajustement de gain. Dans le cas d'un démodulateur multi-porteuse, le palier de bruit est estimé et un recul par rapport à la pleine échelle de l'ADC est pris en compte pour à la fois tenir compte de la dynamique maximale de la densité spectrale des signaux utiles par rapport à celle du bruit, de l'erreur sur la correction en puissance des bursts ainsi que du rapport crête à moyenne puissance PAPR envisagé,
- Un module de réduction de manipulation de bits ou « bitwise », 506 qui permet la réduction du nombre de bits transportant l'information. Les bits les plus significatifs sont retenus,
- Un module émetteur CPRI, 507, qui va émettre les données vers la partie point de collecte PoP.

Du côté du Back-End 50BE au niveau du point de collecte PoP du système, le démodulateur est composé des modules suivants :
• Un récepteur CPRI, 508,
• Un module MF-TDMA burst extraction, 509, du signal reçu, les bursts sont extraits aussi bien dans la dimension fréquentielle que temporelle,
• Un module de synchronisation 510 : chaque burst est alors démodulé. Pour cela, on commence par une synchronisation en temps, puis en fréquence et en phase,
• Un module Demapper, 511 : le signal reçu est alors « démappé » pour en extraire les bits encodés et les symboles de synchronisation sont retirés,
• Un décodeur 512 : les bits sont décodés et désembrouillés afin d'en extraire les données utiles corrigées ou de les rejeter si elles ne peuvent être corrigées.

| | |
|---|---|
| Identificateur de l'émetteur Back-End (n bits) | Taille du container AxC (29 bits) |

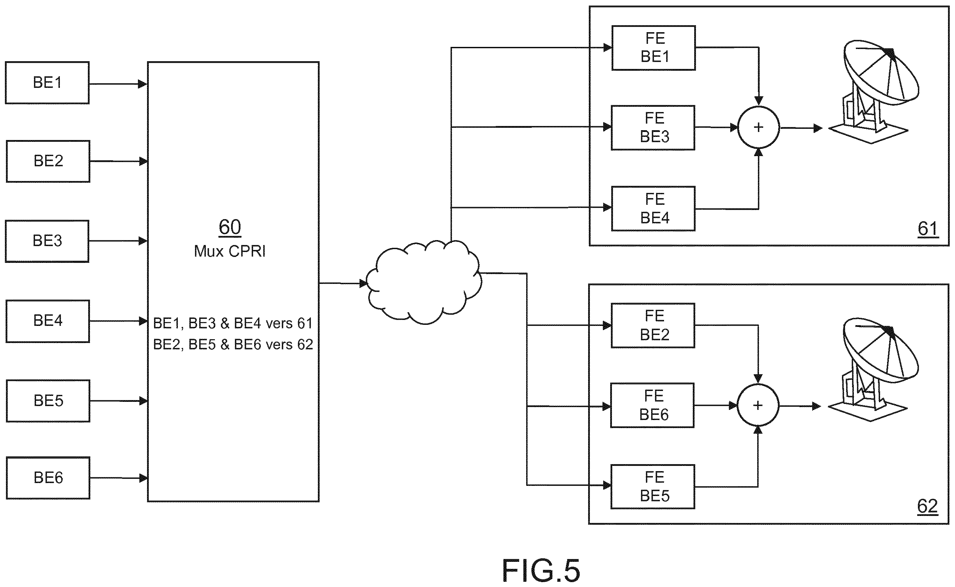

La figure 5 décrit un exemple de multiplexage/démultiplexage des flux de plusieurs Back-End à destination de plusieurs Front-End.

Dans l'exemple, six BE sont considérés dans la partie PoP et utilisent pour transmettre leur flux respectifs les identifiants de 1 à 6. Un multiplexeur CPRI, 60, conforme à l'état de l'art de cette norme est configuré pour multiplexer les flux des Back-Ends BE1, BE3 et BE4 dans le lien CPRI à destination de la première gateway 61. De même les flux des Back-Ends BE2, BE5 et BE6 sont envoyés à destination de la deuxième gateway 62.

Du côté de la première gateway 61, trois Front-Ends sont configurés respectivement pour traiter les flux identifiés F1, F3 et F4. De même, la deuxième gateway 62 a trois Front-Ends configurés pour traiter les flux identifiés F2, F5 et F6.

Grâce à l'identifiant du Back-End émetteur « Back-End transmitter identifier», les flux sont bien multiplexés, transmis vers les gateways respectives, puis extraits.

Lorsqu'un Front-End est défaillant, il est alors aisé de mettre en service un autre Front-End traitant le même identifiant de Back-End et de substituer ce deuxième Front-End au premier.

Enfin, en cas de besoin de diversité géographique, le multiplexeur CPRI doit être reconfiguré afin que le flux d'un Back-End à re-router change de destination et un Front-End dans la nouvelle gateway de destination doit être configuré avec le bon identifiant pour prendre en compte ce nouveau flux.

Le système selon l'invention permet de réduire les coûts d'infrastructure et de maintenance des sites gateways. La diversité de site ne nécessite plus de changer de routage des signaux entre le Hub et la partie radiofréquence RF.

## Revendications

1. Système de transmission de données dans un réseau de communication, le réseau de communication comprenant un lien de transmission satellite, une partie fournisseur de services (20), une partie utilisateur et un réseau d'accès satellite comprenant un point de collecte PoP (21) adapté à dispatcher des flux de données, le système de transmission de données comprenant plusieurs passerelles (26i) comprenant une partie radiofréquence (27j) et ledit système comprenant en outre un modulateur (30) de données à transmettre comprenant au moins une partie dorsale d'émission (30BE) située dans une partie bande de base (10) et une partie frontale d'émission (30FE) située dans la partie radiofréquence (27j) :
• Ladite partie dorsale d'émission (30BE) étant positionnée au niveau de la partie point de collecte PoP (21) et comportant les modules suivants :
• Un module de référence d'horloge réseau NCR (303) adapté à prendre en compte une référence de temps absolue externe pour reconstituer une horloge de réseau pour une synchronisation dans la transmission des données et un module émetteur (304), ledit module NCR (303) étant adapté à fournir au module émetteur (304), lors du début d'une nouvelle hyper-trame à envoyer, une valeur de date courante NCR à insérer dans un champ de données de l'hyper-trame en cours de construction, le début de ladite nouvelle hyper-trame étant indiqué par une information H.F.Tx trigger reçue dudit module émetteur (304),
• Ledit module émetteur (304) étant adapté à recevoir la valeur de ladite date NCR, à l'insérer dans un paquet de données à transmettre à la partie frontale d'émission et à émettre en direction du module NCR (303) l'information H.F.Tₓ trigger sur un instant de synchronisation t_{sync} pour un module récepteur (310) de la partie frontale d'émission,
• Ladite partie frontale d'émission (30FE) étant positionnée dans la partie radiofréquence d'une passerelle et comportant les modules suivants :
• Le module récepteur (310) adapté à générer plusieurs informations vers un module de reconstruction d'une horloge (331) pour la synchronisation et la lecture des données, lesdites informations contenant : une information sur la latence du lien de transmission entre la partie dorsale d'émission et la partie frontale d'émission, une information sur l'instant d'arrivée tₐ dudit paquet de données émis par la partie dorsale d'émission (30BE), signalé par un signal H.F.Rx trigger (402), et une information H.F.Rx NCR (403) correspondant à la valeur de la date NCR extraite du paquet de données et correspondant au début de l'hyper-trame reçue à prendre en compte sur réception de l'information H.F Rx trigger afin de reconstituer localement au niveau de la partie radiofréquence une horloge corrigée de la latence de transmission entre la partie dorsale d'émission et la partie frontale d'émission du modulateur,
• Le module de reconstruction (311) adapté à reconstruire une horloge en local à partir de la valeur de latence du lien de transmission, la valeur de la date NCR contenue dans les données transmises et l'instant d'arrivée tₐ du paquet de données,
• un module d'insertion (312) adapté à insérer l'horloge locale reconstruite dans un paquet de données reçues par le récepteur avant transmission des données modulées via le satellite,
• La partie dorsale d'émission (30BE) et la partie frontale d'émission (30FE) étant adaptées à échanger des données encapsulées selon un protocole utilisé pour la transmission de données dans le système.

2. Système selon la revendication 1 comportant en outre un démodulateur (50) constitué de deux parties :
• Une partie frontale de réception (50FE) située au niveau de la partie passerelle du système comportant les modules suivants :
• Un module (506) de réduction du nombre de bits transportant l'information, avant transmission via un module émetteur (507),
• Une partie dorsale de réception (50BE) située au niveau d'un point de collecte PoP et comportant au moins le module suivant :
• Un module récepteur (508).

3. Système selon l'une des revendications 1 à 2 dans lequel la partie frontale d'émission comporte en outre les éléments suivants :
- un module d'adaptation du flux de données, (313),
- un module de codage (314),
- un module de mapping (315) adapté à transformer les données sous forme de bits codés en symboles,
- un module (316) adapté à insérer un en-tête et des pilotes,
- un module de modulation des données numériques (317),
- un module Tuner (318), et
- un module (319) M&C Handler adapté à assurer la configuration et la surveillance des différents éléments du modulateur.

4. Système selon l'une des revendications 1 à 3 dans lequel le modulateur est un modulateur selon le standard de diffusion de vidéo numérique par satellite de seconde génération DVB-S2.

5. Système selon l'une des revendications 2 à 3 dans lequel le démodulateur est un démodulateur selon le standard de diffusion de vidéo numérique avec voie de retour par satellite de seconde génération DVB-RCS2.

6. Système selon l'une des revendications 1 à 5 dans lequel le protocole utilisé est celui de l'interface radio publique commune CPRI.

7. Procédé de transmission de données mis en œuvre par un système de transmission de données dans un réseau de communication selon l'une des revendications 1 à 6, le réseau de communication comprenant un lien de transmission satellite, une partie fournisseur de services (20), une partie utilisateur et un réseau d'accès satellite comprenant un point de collecte PoP (21) adapté à dispatcher des flux de données, ledit système de transmission de données comprenant plusieurs passerelles (26i) comprenant une partie radiofréquence RF (27j), et ledit système comprenant en outre un modulateur (30) de données à transmettre comprenant au moins une partie dorsale d'émission (30BE) située dans une partie bande de base (10) et une partie frontale d'émission (30FE) située dans la partie radiofréquence, ledit procédé comportant au moins les étapes suivantes :
• Dans la partie dorsale d'émission (30BE) du modulateur située au niveau du point de collecte PoP (21), ladite partie dorsale d'émission comprenant un module de référence d'horloge réseau NCR (303) et un module émetteur (304) :
• Une étape de prise en compte par le module NCR (303) d'une référence de temps absolue externe pour reconstituer une horloge de réseau utilisée pour synchroniser la transmission des données, de transmission au module émetteur (304), lors du début d'une nouvelle hyper-trame à envoyer, d'une valeur de date courante NCR à insérer dans un champ de données de l'hyper-trame en construction et de réception d'une information H.F.Tx trigger émise par ledit module émetteur (304) indiquant le début de ladite nouvelle hyper-trame,
• Une étape de réception par le module émetteur (304) de la valeur de la date NCR, d'insertion de cette valeur de date NCR dans un paquet de données à transmettre à la partie frontale d'émission (30FE) et d'émission en direction du module NCR (303) de l'information H.F.Tₓ trigger sur un instant de synchronisation t_{sync} pour un module récepteur (310) de la partie frontale d'émission (30FE),
• Dans la partie frontale d'émission (30FE) :
• Une étape de génération par le module récepteur d'informations pour la synchronisation et la lecture des données et d'émission de ces informations vers un module de reconstruction d'une horloge (311), cesdites informations contenant: une information sur la latence du lien de transmission entre la partie dorsale d'émission et la partie frontale d'émission, une information tₐ sur l'instant d'arrivée du paquet de données émis par la partie dorsale d'émission (30BE), signalé par un signal H.F.Rx trigger (402) et une information H.F.Rx NCR (403) correspondant à la valeur de la date NCR extraite du paquet de données et correspondant au début de l'hyper-trame reçue à prendre en compte sur réception de l'information H.F Rx trigger afin de reconstituer localement au niveau de la partie radiofréquence une horloge corrigée de la latence de transmission entre la partie dorsale d'émission et la partie frontale d'émission du modulateur,
• Une étape de reconstruction par le module de reconstruction (311) d'une valeur d'horloge locale à partir de la valeur de latence du lien de transmission, de la valeur de la date NCR contenue dans les données transmises et de l'instant d'arrivée tₐ du paquet de données,
• Une étape d'insertion par un module d'insertion de l'horloge locale reconstruite dans un paquet de données reçues par le récepteur avant transmission des données modulées via le satellite,
• Une étape d'échange entre la partie dorsale d'émission (30BE) et la partie frontale d'émission (30FE) de données encapsulées selon un protocole utilisé pour la transmission de données dans le système.

8. Procédé selon la revendication 7 dans lequel le format de l'interface radio publique commune CPRI est utilisé pour la transmission des données encapsulées entre la partie dorsale d'émission (30BE) et la partie frontale d'émission (30FE).

9. Procédé selon l'une des revendications 7 ou 8 dans lequel un format de trames selon le standard de diffusion de vidéo numérique par satellite de génération DVB-S2 est utilisé.

## Patentansprüche

1. Datenübertragungssystem in einem Kommunikationsnetz, wobei das Kommunikationsnetz Folgendes umfasst: eine Satellitenübertragungsverbindung, einen Dienstanbieterteil (20), einen Benutzerteil und ein Satellitenzugangsnetz, das eine PoP-Sammelstelle (21) umfasst, die zum Absenden von Datenströmen ausgelegt ist, wobei das Datenübertragungssystem mehrere Gateways (26i) umfasst, die einen Radiofrequenzteil (27j) umfassen und das System ferner einen Modulator (30) für zu übertragende Daten umfasst, der mindestens einen Sende-Backteil (30BE), der sich in einem Basisbandteil (10) befindet, und einen Sende-Frontteil (30FE), der sich im Radiofrequenzteil (27j) befindet, umfasst:
• wobei der Sende-Backteil (30BE) am PoP-Sammelstellenteil (21) positioniert ist und die folgenden Module umfasst:
• ein NCR-Netzwerktaktreferenzmodul (303), das ausgelegt ist, um eine externe absolute Zeitreferenz zu berücksichtigen, um einen Netzwerktakt zum Synchronisieren bei der Datenübertragung zu rekonstruieren, und ein Sendemodul (304), wobei das NCR-Modul (303) ausgelegt ist, um dem Sendemodul (304), ab dem Beginn eines neuen zu sendenden Super-Frame, einen aktuellen NCR-Datumswert zu liefern, der in ein Datenfeld des Super-Frame im Laufe der Konstruktion einzufügen ist, wobei der Beginn des neuen Super-Frame durch eine vom Sendemodul (304) empfangene H.F.Tx-Triggerinformation angezeigt wird,
• wobei das Sendemodul (304) ausgelegt ist, um den Wert des NCR-Datums zu empfangen, ihn in ein an den Sende-Frontteil zu übertragendes Datenpaket einzufügen und um, in Richtung des NCR-Moduls (303), die H.F.Tx-Triggerinformation zu einem Synchronisationszeitpunkt t_{sync} für ein Empfangsmodul (310) des Sende-Frontteils zu senden,
• wobei der Sende-Frontteil (30FE) im Radiofrequenzteil eines Gateways positioniert ist und die folgenden Module umfasst:
• das Empfängermodul (310), das ausgelegt ist, um mehrere Informationen zu einem Taktrekonstruktionsmodul (311) zu erzeugen, zum Synchronisieren und Lesen der Daten, wobei die Informationen Folgendes enthalten: eine Information über die Latenz der Übertragungsverbindung zwischen dem Sende-Backteil und dem Sende-Frontteil, eine Information über die Ankunftszeit tₐ des vom Sende-Backteil (30BE) gesendeten Datenpakets, signalisiert durch ein H.F.Rx-Triggersignal (402), und eine H.F.Rx NCR-Information (403), die dem Wert des NCR-Datums entspricht, das aus dem Datenpaket extrahiert wurde, und dem Beginn des empfangenen Super-Frame entspricht zur Berücksichtigung beim Empfang der H.F.Rx-Triggerinformation, um lokal am Radiofrequenzteil einen Takt zu rekonstruieren, der für die Übertragungslatenz zwischen dem Sende-Backteil und dem Sende-Frontteil des Modulators korrigiert ist,
• das Rekonstruktionsmodul (311), das ausgelegt ist, um einen lokalen Takt aus dem Latenzwert der Übertragungsverbindung, den Wert des in den übertragenen Daten enthaltenen NCR-Datums und die Ankunftszeit tₐ des Datenpakets zu rekonstruieren,
• ein Einfügungsmodul (312), das ausgelegt ist, um den rekonstruierten lokalen Takt in ein vom Empfänger empfangenes Datenpaket vor der Übertragung der modulierten Daten über den Satelliten einzufügen,
• wobei der Sende-Backteil (30BE) und der Sende-Frontteil (30FE) zum Austauschen von verkapselten Daten gemäß einem für die Übertragung von Daten in dem System benutzten Protokoll ausgelegt sind.

2. System nach Anspruch 1, das ferner einen aus zwei Teilen bestehenden Demodulator (50) umfasst:
• ein Empfangs-Frontteil (50FE), der sich am Gateway-Teil des Systems befindet, das die folgenden Module umfasst:
• ein Modul (506) zum Reduzieren der Anzahl von Informationen transportierenden Bits vor der Übertragung über ein Sendemodul (507),
• ein Empfangs-Backteil (50BE), das sich an einer PoP-Sammelstelle befindet und mindestens das folgende Modul umfasst:
• ein Empfangsmodul (508).

3. System nach einem der Ansprüche 1 bis 2, wobei der Sende-Frontteil ferner die folgenden Elemente umfasst:
- ein Datenflussanpassungsmodul (313),
- ein Codierungsmodul (314),
- ein Mapping-Modul (315), das ausgelegt ist, um die Daten in Form von codierten Bits in Symbole umzuwandeln,
- ein Modul (316), das ausgelegt ist um einen Header und Treiber einzufügen,
- ein Modul (317) zum Modulieren digitaler Daten,
- ein Tuner-Modul (318), und
- ein M&C-Handler-Modul (319), das ausgelegt ist, um die Konfiguration und Überwachung der verschiedenen Elemente des Modulators zu gewährleisten.

4. System nach einem der Ansprüche 1 bis 3, wobei der Modulator ein Modulator gemäß dem digitalen Satelliten-Videoübertragungsstandard der zweiten Generation DVB-S2 ist.

5. System nach einem der Ansprüche 2 bis 3, wobei der Demodulator ein Demodulator gemäß dem digitalen Videoübertragungsstandard mit Satellitenrückkanal der zweiten Generation DVB-RCS2 ist.

6. System nach einem der Ansprüche 1 bis 5, wobei das benutzte Protokoll das der gemeinsamen öffentlichen Funkschnittstelle CPRI ist.

7. Verfahren zur Datenübertragung, das von einem Datenübertragungssystem in einem Kommunikationsnetz nach einem der Ansprüche 1 bis 6 durchgeführt wird, wobei das Kommunikationsnetz Folgendes umfasst: eine Satellitenübertragungsverbindung, einen Dienstanbieterteil (20), einen Benutzerteil und ein Satellitenzugangsnetz, das eine PoP-Sammelstelle (21) umfasst, die zum Absenden von Datenströmen ausgelegt ist, wobei das Datenübertragungssystem mehrere Gateways (26i) umfasst, die einen Radiofrequenz-(RF)-Teil (27j) umfassen und das System ferner einen Modulator (30) für zu übertragende Daten umfasst, der mindestens einen Sende-Backteil (30BE), der sich in einem Basisbandteil (10) befindet und einen Sende-Frontteil (30FE), der sich im Radiofrequenzteil (27j) befindet, umfasst, wobei das Verfahren mindestens die folgenden Schritte beinhaltet:
• in dem Sende-Backteil (30BE) des Modulators, der sich an der PoP-Sammelstelle (21) befindet, wobei der Sende-Backteil ein NCR-Netzwerktaktreferenzmodul (303) und ein Sendemodul (304) umfasst:
• einen Schritt des Berücksichtigens, durch das NCR-Modul (303), einer externen absoluten Zeitreferenz, um einen Netzwerktakt zu rekonstruieren, der zum Synchronisieren der Datenübertragung benutzt wird, des Übertragens, an das Sendemodul (304), ab dem Beginn eines neuen zu sendenden Super-Frame, eines aktuellen NCR-Datumswertes, der in ein Datenfeld des Super-Frame im Laufe der Konstruktion einzufügen ist und des Empfangs einer vom Sendemodul (304) gesendeten H.F.Tₓ-Triggerinformation, die den Beginn des neuen Super-Frame anzeigt,
• einen Schritt des Empfangens, durch das Sendemodul (304), des Wertes des NCR-Datums, des Einfügens dieses NCR-Datumwertes in ein an den Sende-Frontteil (30FE) zu übertragendes Datenpaket und des Sendens, in Richtung des NCR-Moduls (303), der H.F.Tx-Triggerinformation zu einem Synchronisationszeitpunkt t_{sync} für ein Empfangsmodul (310) des Sende-Frontteils (30FE),
• im Sende-Frontteil (30FE):
• einen Schritt des Erzeugens, durch das Empfängermodul, von Informationen zum Synchronisieren und Lesen der Daten, und des Sendens dieser Informationen an ein Taktrekonstruktionsmodul (311), wobei die Informationen Folgendes enthalten: eine Information über die Latenz der Übertragungsverbindung zwischen dem Sende-Backteil und dem Sende-Frontteil, eine Information tₐ über die Ankunftszeit des vom Sende-Backteil (30BE) gesendeten Datenpakets, signalisiert durch ein H.F.Rₓ-Triggersignal (402), und eine H.F.Rₓ NCR-Information (403), die dem Wert des NCR-Datums entspricht, das aus dem Datenpaket extrahiert wurde, die dem Beginn des empfangenen Super-Frame zur Berücksichtigung beim Empfang der H.F.Rₓ-Triggerinformation, um lokal am Radiofrequenzteil einen Takt zu rekonstruieren, der für die Übertragungslatenz zwischen dem Sende-Backteil und dem Sende-Frontteil des Modulators korrigiert ist,
• einen Schritt des Rekonstruierens, durch das Rekonstruktionsmodul (311), eines lokalen Taktwerts aus dem Latenzwert der Übertragungsverbindung, des Wertes des in den übertragenen Daten enthaltenen NCR-Datums und der Ankunftszeit tₐ des Datenpakets,
• einen Schritt des Einfügens, durch ein Einfügungsmodul, des rekonstruierten lokalen Takts in ein vom Empfänger empfangenes Datenpaket vor der Übertragung der modulierten Daten über den Satelliten,
• einen Schritt des Austauschens, zwischen dem Sende-Backteil (30BE) und dem Sende-Frontteil (30FE), von verkapselten Daten gemäß einem für die Übertragung von Daten in dem System benutzten Protokoll.

8. Verfahren nach Anspruch 7, wobei das Format der gemeinsamen öffentlichen Funkschnittstelle CPRI für die Übertragung der verkapselten Daten zwischen dem Sende-Backteil (30BE) und dem Sende-Frontteil (30FE) benutzt wird.

9. Verfahren nach Anspruch 7 oder 8, wobei ein Frame-Format gemäß dem digitalen Satelliten-Videoübertragungsstandard der zweiten Generation DVB-S2 benutzt wird.

## Claims

1. Data transmission system in a communication network, the communication network comprising a satellite transmission link, a service provider part (20), a user part and a satellite access network comprising a collection point PoP (21) adapted to dispatch data flows, the data transmission system comprising several gateways (26i) comprising a radiofrequency part (27j), and said system further comprising a modulator (30) of data to be transmitted comprising at least one emission back part (30BE) located in a baseband part (10) and an emission front part (30FE) located in the radiofrequency part (27j):
• said emission back part (30BE) being positioned at the collection PoP point part (21) and comprising the following modules:
• an NCR network clock reference module (303) adapted to take into account an external absolute time reference to reconstitute a network clock for a synchronization in the data transmission and a emitter module (304), said NCR module (303) being adapted to supply to the emitter module (304), at the start of a new hyper-frame to be sent, a current date value NCR to be inserted in a data field of the hyper-frame under construction, the start of said new hyper-frame being indicated by a revised H.F.Tₓ trigger information of said emitter module (304),
• said emitter module (304) being adapted to receive the value of said NCR date, to insert it into a data packet to be transmitted to the emission front part and to emit to the NCR module (303) the information H.F.Tₓ trigger on a t_{sync} synchronization instant for a receiver module (310) of the front emission part,
• said emission front part (30FE) being positioned in the radiofrequency part of a gateway and comprising the following modules:
• the receiver module (310) being adapted to generate several pieces of information towards a module for reconstructing a clock (311) for synchronizing and reading the data, said information containing: information on the latency of the transmission link between the emission back part and the emission front part, information on the arrival time tₐ of said data packet emitted by the emission back part (30BE), signaled by an H.F.Rₓ trigger signal (402), and an H.F.Rₓ NCR information (403) corresponding to the value of the NCR date extracted from the data packet and corresponding to the start of the received hyper-frame to be taken into account on receipt of the H.F.Rₓ trigger information in order to reconstitute locally at the radiofrequency part a clock corrected for the transmission latency between the emission back part and the emission front part of the modulator,
• the reconstruction module (311) adapted to reconstruct a clock locally from the latency value of the transmission link, the value of the NCR date contained in the transmitted data and the arrival time tₐ of the data packet,
• an insertion module (312) adapted to insert the local clock reconstructed in a data packet received by the receiver before transmission of the modulated data via the satellite,
• the emission back part (30BE) and the emission front part (30FE) being adapted to exchange encapsulated data according to a protocol used for the transmission of data in the system.

2. System according to claim 1 further comprising a demodulator (50) consisting of two parts:
• a reception front part (50FE) located at the gateway part of the system comprising the following modules:
• a module (506) for reducing the number of bits carrying the information, before transmission via an emitter module (507),
• a reception back part (50BE) located at a PoP collection point and comprising at least the following module:
• a receiver module (508).

3. System according to one of claims 1 to 2 wherein the emission front part further comprises the following elements:
- a data flow adaptation module, (313),
- a coding module (314),
- a mapping module (315) suitable for transforming data in the form of code bits into symbols,
- a module (316) adapted to insert a header and drivers,
- a digital data modulation module (317),
- a Tuner module (318), and
- an M&C Handler module (319) suitable for configuring and monitoring the various elements of the modulator.

4. System according to one of claims 1 to 3 wherein the modulator is a modulator according to the standard for broadcasting digital video by satellite of the second generation DVB-S2.

5. System according to one of claims 2 to 3 wherein the demodulator is a demodulator according to the digital video broadcasting standard with return channel by satellite of the second generation DVB-RCS2.

6. System according to one of claims 1 to 5 wherein the protocol used is that of the common public radio interface CPRI.

7. Data transmission method implemented by a data transmission system in a communication network according to one of claims 1 to 6, the communication network comprising a satellite transmission link, a service provider part (20), a user part and a satellite access network comprising a PoP collection point (21) suitable for dispatching data streams, said data transmission system comprising several gateways (26i) comprising an RF radio frequency part (27j), and said system further comprising a modulator (30) of data to be transmitted comprising at least an emission back part (30BE) located in a baseband part (10) and an emission front part (30FE) located in the radiofrequency part, said method comprising at least the following steps:
• in the emission back part (30BE) of the modulator located at the PoP collection point (21), said emission back part comprising an NCR network clock reference module (303) and an emitter module (304):
• a step of taking into account by the NCR module (303) an external absolute time reference to reconstitute a network clock used to synchronize the transmission of data, of transmission to the emitter module (304), at the start of a new hyperframe to be sent, of a current date value NCR to be inserted into a data field of the hyperframe under construction and for reception of an H.F.Tₓ trigger information emitted by said emitter module (304) indicating the start of said new hyper-frame,
• a step of receiving by the emitter module (304) the value of the NCR date, of inserting this NCR date value in a data packet to be transmitted to the emission front part (30FE) and of emitting in the direction of the NCR module (303) the H.F.Tₓ trigger information on a t_{sync} synchronization instant for a receiver module (310) of the emission front part (30FE),
• in the emission front part (30FE):
• a step of generating, by the receiver module, information for synchronization and reading of data, and of emitting this information to a module for reconstructing a clock (311), said information containing: information on the latency of the transmission link between the emission back part and the emission front part, information tₐ on the time of arrival of the data packet emitted by the emission back part (30BE), signaled by an H.F.Rₓ trigger signal, (402), and an H.F.Rₓ NCR information (403) corresponding to the value of the NCR date extracted from the data packet corresponding to the start of the received hyper-frame to be taken into account on receipt of the H.F.Rₓ trigger information in order to locally reconstitute at the radiofrequency part a clock corrected for the transmission latency between the emission back part and the emission front part of the modulator,
• a step of reconstructing, by the reconstruction module, (311), a local clock value from the latency value of the transmission link, the value of the NCR date contained in the data transmitted and the time of arrival tₐ of the data packet,
• a step of inserting, by an insertion module, the local clock reconstituted in a data packet received by the receiver before transmission of the modulated data via the satellite,
• a step of exchanging, between the emission back part (30BE) and the emission front part (30FE), encapsulated data according to a protocol used for the transmission of data in the system.

8. The method of claim 7, wherein the format of the common public radio interface CPRI is used for the transmission of encapsulated data between the emission back part (30BE) and the emission front part (30FE).

9. Method according to one of claims 7 or 8, wherein a frame format according to the standard for broadcasting digital video by satellite of DVB-S2 generation is used.
